# EUROPÄISCHE PATENTSCHRIFT

(11) **EP 3 650 134 B1**
(45) Veröffentlichungstag und Bekanntmachung des Hinweises auf die Patenterteilung: **19.05.2021**
(21) Anmeldenummer: 18205431.2
(22) Anmeldetag: 09.11.2018
(51) Int. Cl.: B21D 1/00, B21D 53/88

(54) **RICHTPROZESS**
ALIGNMENT PROCESS
PROCÉDÉ DE REDRESSAGE

(43) Veröffentlichungstag der Anmeldung: 13.05.2020
(73) Patentinhaber: GF Casting Solutions Altenmarkt GmbH & Co. KG, Altenmarkt bei St. Gallen (AT)
(72) Erfinder: MARKO, Heinrich, 8913 Admont (AT); SONUC, Gökhan, 88348 Bad Saulgau (DE)
(74) Vertreter: Fenner, Seraina

(56) Entgegenhaltungen:
- EP-A2- 2 019 283
- DE-A1- 10 260 909
- YILMAZ O ET AL: "A repair and overhaul methodology for aeroengine components", ROBOTICS AND COMPUTER INTEGRATED MANUFACTURING, ELSEVIER SCIENCE PUBLISHERS BV., BARKING, GB, Bd. 26, Nr. 2, 1. April 2010 (2010-04-01), Seiten 190-201, XP026742469, ISSN: 0736-5845, DOI: 10.1016/J.RCIM.2009.07.001 [gefunden am 2009-08-15]
- Creaform: "VXmodel: Scan-to-CAD software module", , 5. Mai 2014 (2014-05-05), XP054977484, Gefunden im Internet: URL:https://www.youtube.com/watch?v=TNWuYE PQSTI [gefunden am 2017-06-28]

## Beschreibung

Die Erfindung betrifft ein Verfahren zum Richten der Form eines plastisch verformbaren Bauteils, vorzugsweise aus einem metallischen Werkstoff beinhaltend:
- Erstellen eines 3-dimensionalen Soll-Modells des Bauteils;
- Auslegen eines Finite-Elemente-Modells (FEM) des Soll-Modells des Bauteils;
- Erfassen der 3-dimensionalen Geometrie des verformten Ist-Bauteils; vorzugsweise durch Scannen;
- Ermitteln der Abweichung des Ist-Bauteils gegenüber dem Soll-Modell;
- Verformen durch Aufbringen von Kräften an errechneten Positionen des Bauteils;
- Überprüfen und Vergleichen des Ist-Bauteils nach dem Verformungsvorgang mit dem Soll-Modell.

Aus dem Stand der Technik ist ein Verfahren zum Richten eines Bauteils bekannt in dem das Ist-Bauteil genauestens vermessen wird und mit einem 3-dimensionalen Soll-Modell verglichen wird. Mit Hilfe eines Computerprogramms werden die masslichen Abweichungen einem Arbeiter aufgezeigt, der diese Stellen manuell durch Anwendung einer Zug- oder Druckkraft korrigiert. Um ein Ist-Bauteil zu erhalten das den masslichen Anforderungen entspricht sind in der Regel acht bis 15 solcher Verform- und Prüfdurchgänge bzw. Zyklen zu durchlaufen, was einen hohen Zeitaufwand abverlangt.

Die DE 196 11 897 offenbart ein Verfahren zum Biegen oder Richten von metallischen Werkstücken, wobei die Ist-Form des Werkstücks und die Abweichung von der Soll-Form durch einen Kraft- und einen Wegsensor ermittelt werden, welche die Jitter erfasst. Im weiteren Biegeverlauf werden die ermittelten Werte zur Berechnung der Rückfederung und damit zur Berechnung der bleibenden Verformung nach der Entlastung computergestützt ausgewertet und der Verformungsvorgang wird beendet, sobald die errechnete bleibende Verformung dem Erreichen der Soll-Form entspricht. Ein solches computergeschütztes Verfahren aufgrund der ermittelten Jitter mit Hilfe eines Kraft- und Wegsensors erfordert jedoch einen nicht unerheblichen zeitlichen und apparativen Aufwand.

Es ist Aufgabe der Erfindung ein Verfahren vorzuschlagen, bei welchem der Richtvorgang eines Bauteils bis zum fertig gerichteten Bauteil schnell und unabhängig abläuft indem möglichst wenig Prüf- und Vergleichsvorgänge durchgeführt werden müssen.

Diese Aufgabe wird erfindungsgemäss dadurch gelöst, dass die angewandten Kräfte zur Verformung und die errechneten Positionen zur Einleitung der Kräfte am Bauteil aufgrund des FEMs ermittelt werden.

Das erfindungsgemässe Verfahren zum Richten der Form eines plastisch verformbaren Bauteils vorzugsweise aus einem metallischen Werkstoff beinhaltet das Erstellen eines 3-dimensionalen Soll-Modells des Bauteils, vorzugsweise als CAD-Modell.

Als weiteren Schritt beinhaltet das Verfahren ein Auslegen eines Finite-Elemente-Modells (FEM-Modell) des Soll-Modells des Bauteils. Das FEM-Modell kann die Verhalten des Bauteils bei Krafteinflüssen simulieren. In der Regel werden solche FEM-Modelle zur Dimensionierung von Bauteilen und deren Formgestaltung verwendet, damit eine optimierte Form bei vorherrschenden Kräften und anderen Einflüssen erstellt werden kann.

Das verformte Ist-Bauteil bzw. dessen 3-dimensionalen Geometrie wird erfasst vorzugsweise mittels Scannen, wobei die erfassten Daten vorzugsweise zumindest vorübergehend in einem Computer oder Cloud gespeichert werden. In der Regel kommt das Ist-Bauteil direkt anschliessend an den Herstellungsprozess zum Erfassen der Geometrie. Dies optimiert den kompletten Herstellungsprozess eines Bauteils bis zur Ausrichtung des Bauteils. Die erfassten wie erstellten Daten dieses Verfahrens bzw. des Ist-Bauteils, des Soll- und FEM-Modells können vorzugsweise auch in einer Cloud gesammelt werden und für andere Richtverfahren als Erfahrungswerte miteinbezogen werden. Wobei auch die Daten aus dem Herstellungsprozess, sei es Materialdaten, Giessdaten, Wärmebehandlungsdaten oder andere Daten die dem Verfahren dienen können, in den Richtprozess miteinbezogen werden, wobei die Daten vorzugsweise in einer Cloud gesammelt werden und von den unterschiedlichen Systemen her zugegriffen und miteinander verrechnet werden können.

Die erfassten Daten ermöglichen das Ermitteln der Abweichung des Ist-Bauteils gegenüber dem Soll-Modell. Aufgrund der erfassten 3-dimensionalen Geometrie des Ist-Bauteils und des erstellten Soll-Modells kann die Abweichung der Form ermittelt werden. Vorzugsweise werden dazu Computerprogramme eingesetzt die eine rasche Durchführung erlauben und die erfassten wie erstellten Daten abgleichen.

Aufgrund der ermittelten Abweichung kann ein definiertes Verformen durch Aufbringen von Kräften an errechneten Positionen des Ist-Bauteils durchgeführt werden. Die Formabweichungen können vom System optisch angezeigt werden aufgrund derer eine Verformung durchgeführt werden kann.

Nach einer durchgeführten Verformung findet ein Überprüfen und Vergleichen des Ist-Bauteils mit dem Soll-Modell statt. Bei nicht erreichen der Form des Soll-Modells des Ist-Bauteils wird erneut ein Verformungsvorgang durchgeführt aufgrund der neu ermittelten Abweichungen zwischen dem Ist-Bauteil und dem Soll-Modell. Anschliessend wird ebenfalls erneut eine Überprüfung und ein Vergleich zwischen Ist-Bauteil und Soll-Modell durchgeführt, der Zyklus wurde also erneut durchlaufen. Diese Vorgänge bzw. Zyklus wird so oft wiederholt, bis das Ist-Bauteil dem Soll-Modell entspricht.

Gemäss der vorliegenden Erfindung wird dieses Verfahren optimiert indem die angewandten Kräfte zur Verformung und die errechneten Positionen zur Einleitung der Kräfte am Ist-Bauteil aufgrund des FEM-Modells ermittelt werden bzw. dies eine Basis zur ersten Verformung bildet. Vorzugsweise gibt das System bzw. der Computer definierte Kräfte vor die an den jeweils errechneten Positionen eingeleitet werden um eine errechnete Verformung des Ist-Bauteils zu erzielen aufgrund des FEM-Modells. Durch diese Vorgabe von definierten Kräfte, die auf das Ist-Bauteil wirken und auch die genaue Position, wo die Kräfte eingeleitet werden sollen, kann mittels dem FEM-Modell die auftretende Verformung am Ist-Bauteil vordefiniert werden. Dadurch kann die Anzahl der Zyklen reduziert werden, da durch die Ermittlung der zu erwartenden Verformung aufgrund der vordefinierten Kräfte und Positionen zur Einleitung der Kräfte mit Hilfe des FEM-Modells eine dem Soll-Modell nahes Ist-Bauteil erzielt wird, bereits nach dem ersten Zyklus.

Es ist vorteilhaft, wenn das FEM-Modell als Basis des ersten Richtvorgangs dient. Aufgrund dessen wird ein erster Richtvorgang durchgeführt, der durch das hinterlegte FEM-Modell, die zu erwartende Verformung am Ist-Bauteil relativ genau ermitteln lässt.

Um die Ergebnisse zu optimieren bzw. den Richtvorgang werden die nach jedem Verformungsdurchgang und anschliessenden Überprüfungs- und Vergleichsdurchgang erfassten Daten, wie angewandte Kräfte, Positionen, erzielte Verformung usw. vom System bzw. Computer erfasst und so die Kräfte und Positionen optimiert, welche beim nächsten Zyklus angewandt werden wie auch bei den Folgebauteilen von Beginn her die optimierten Kräfte und Positionen angewandt werden, damit im besten Fall ein Verformungsdurchgang reichen würde um das Ist-Bauteil zu richten damit es dem Soll-Modell entspricht. Solche Daten können in einer Cloud gespeichert und unter den Systemen ausgetauscht werden.

Vorzugsweise werden zu dieser Optimierung die angewandten Kräfte zur Verformung des Bauteils und die errechneten Positionen mittels eines Algorithmus bestimmt. Das heisst, nach jeder Verformung, bei welcher Kräfte und Positionen vorgegeben wurden und danach das Ist-Bauteil überprüft und verglichen wurde, werden die Daten erfasst und im System bzw. Computer mittels eines Algorithmus optimiert so dass je mehr Zyklen oder je mehr Ist-Bauteils gerichtet werden je weniger Zyklen nötig sind, da mittels des Algorithmus bzw. der künstlichen Intelligenz sich das Verfahren optimiert. Das heisst im Optimalfall wird noch ein Zyklus benötigt, jedoch aufgrund von Erfahrungswerten hat sich gezeigt, dass eine Reduktion der Zyklen auf drei bis sechs, im Vergleich zum heutigen Stand der Technik wo eine Zykluszahl von unter acht Durchgängen nicht zu erwarten ist, sehr gut ist.

Vorzugsweise wird der Algorithmus zur Bestimmung der Kräfte und der Positionen zur Einleitung der Kräfte nach jedem Überprüf- und Vergleichsvorgang des Ist-Modells mit dem 3-dimensionalen Soll-Modell anhand der neu erworbenen Daten optimiert. Die neu erworbenen Daten zeigen die effektive Verformung des Ist-Bauteils anhand der aufgewendeten Kräfte an den definierten Positionen. Aufgrund der neu erworbenen Daten können die Basis-Daten des FEM-Modells die für den ersten Zyklus angewandt wurden optimiert und verfeinert werden. Jeder Durchgang verfeinert und optimiert somit die Daten die zur optimalen Verformung benötigt werden wodurch die Zyklen reduziert werden können und die Prozesszeit verkürzt wird. Das Verfahren ist somit selbstlernend und optimiert sich bzw. den Algorithmus selbst.

Es ist vorteilhaft, wenn der Algorithmus zur Bestimmung der Kräfte und der Positionen zur Einleitung der Kräfte nach jedem Überprüf- und Vergleichsvorgang des Ist-Modells mit dem 3-dimensionalen Soll-Modell anhand der gesammelten Daten optimiert wird, wobei die gesammelten Daten vorzugsweise aus den neu erworbenen Daten der einzelnen Zyklusdurchläufe gebildet sind. Vorteilhaft ist es, wenn noch weitere Daten bezüglich den Ist-Bauteilen miteinfliessen, welche aus vorangehenden Prozessen wie dem Herstellungsprozess oder einer eventuellen Wärmebehandlung kommen. All diese Daten können in einer Cloud gesammelt werden und für das erfindungsgemässe Verfahren bzw. die Optimierung des Algorithmus miteinfliessen.

Die Erfindung zeichnet sich auch dadurch aus, dass die Kräfte mittels Roboter auf das Ist-Bauteil ausgeführt werden. Durch die Umsetzung der Kräfte auf das Ist-Bauteil mittels Roboter kann die Kraft bzw. die Höhe der Kraft genau umgesetzt und nachvollzogen werden. Zudem kann der Roboter während der Ausführung überwacht werden ob eine genaue Umsetzung erfolgt ist. Vorzugsweise können die Daten gleich vom System erfasst werde, welche dann zur Optimierung der Daten mit Bezug auf die erreichte Verformung im System mittels Algorithmus verarbeitet werden können.

Es ist vorteilhaft wenn die Kräfte als Zug- und Druckkräfte auf das Ist-Bauteil angewandt werden. Dies ermöglicht spezifische Verformungen des Ist-Bauteils um die benötigte Form des Soll-Bauteils zu erzielen.

Das erfindungsgemässe Verfahren wird vorzugsweise für Strukturteile aus der Fahrzeugtechnik angewandt, da diese meist dünnwandig sind und sich deshalb leicht bei der Herstellung verziehen und im Anschluss gerichtet werden müssen. Speziell bevorzugt für ein solches Verfahren sind Druckgussteile da diese dünnwandigen, meist aus Leichtmetall hergestellten Bauteile sich während des Giessen bzw. Ausformens verziehen und anschliessend einem Richten unterzogen werden müssen. Zudem liegt bei solchen Teilen eine hohe Stückzahl vor wodurch sich eine solche Prozessoptimierung wirtschaftlich lohnt.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:

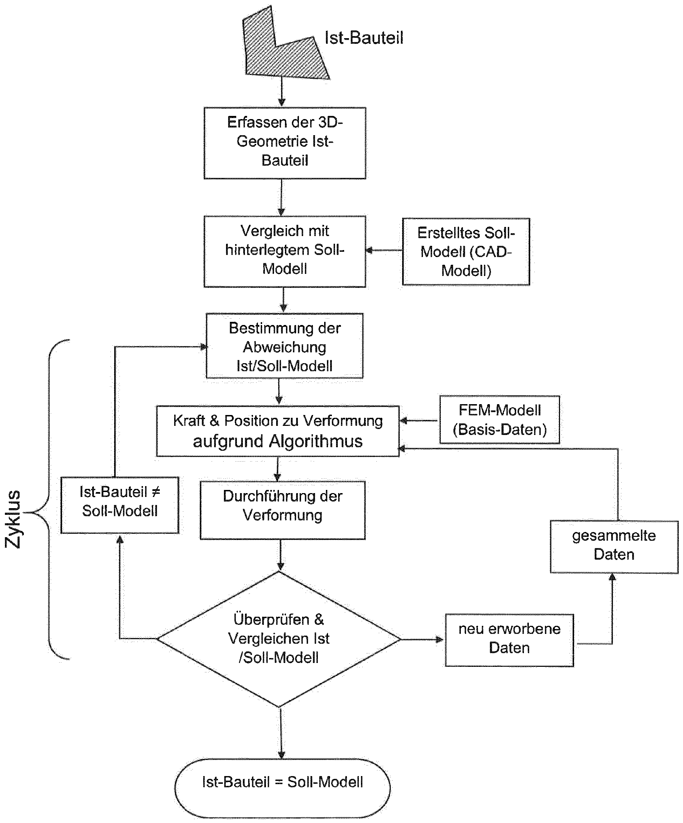

Fig. 1 ein Flussdiagram des Ablaufs des erfindungsgemässen Verfahrens.

Das Ist-Bauteil bzw. dessen 3-dimensionale Geometrie wird digital erfasst vorzugsweise mittels scannen der Geometrie. Diese Daten werden gespeichert und mit dem Soll-Modell verglichen, welches digital erstellt wurde vorzugsweise als CAD-Modell. Der Vergleich zeigt die Abweichungen der Geometrien zueinander auf. Aufgrund des im System hinterlegten FEM-Modells, welches auf der Basis des 3-dimensionalen Soll-Modells erstellt wurde und den Abweichungen des Ist-Bauteils zum Soll-Modell kann ermittelt werden welche Kräfte an welchen Positionen angewandt werden müssen um die Geometrie des Soll-Modells zu erreichen. Das System führt dann eine Verformung des Ist-Bauteils aufgrund der errechneten Kräfte und der Positionen zur Einleitung der Kräfte durch. Beim ersten Zyklus basieren diese Kräfte und Positionen vorzugsweise ausschliesslich auf dem FEM-Modell, bei jedem weiteren Zyklus, sei es am selben Bauteil oder an einem formgleichen Bauteil welches das Verfahren durchläuft, wurden die Daten und somit die angewandten Kräfte und Positionen bereits durch Erfahrungswerte von zuvor gerichteten Bauteilen optimiert. Das heisst, nach dem ersten Verformungsvorgang wird das Ist-Bauteil mit dem Soll-Modell verglichen und die Daten erfasst, wobei die Daten im System bzw. Computer oder auch in einer Cloud gespeichert werden und vorzugweise mit andern Daten wie Materialdaten usw. ergänzt. Beim nicht erreichen der Soll-Form des Ist-Bauteils durchläuft das Ist-Bauteil einen weiteren Zyklus. Es wird somit wieder die Abweichung zum Soll-Modell bestimmt und mittels den neu erworbenen Daten und den gesammelten Daten, welche durch frühere Zyklen im System vorhanden sind, erneut eine Verformung durchgeführt, welche mittels eines Algorithmus ermittelt wurde der nach jedem Zyklus optimiert wird und dadurch ein selbstlernendes Verfahren bildet. Die Wiederholung der Zyklen endet, wenn das Ist-Bauteil dem Soll-modell entspricht.

## Patentansprüche

1. Verfahren zum Richten der Form eines plastisch verformbaren Bauteils vorzugsweise aus einem metallischen Werkstoff beinhaltend:
• Erstellen eines 3-dimensionalen Soll-Modells des Bauteils;
• Auslegen eines Finite-Elemente-Modells (FEM-Modell) des Soll-Modells des Bauteils;
• Erfassen der 3-dimensionalen Geometrie des verformten Ist-Bauteils; vorzugsweise durch Scannen;
• Ermitteln der Abweichung des Ist-Bauteils gegenüber dem Soll-Modell;
• Verformen durch Aufbringen von Kräften an errechneten Positionen des Bauteils;
• Überprüfen und Vergleichen des Ist-Bauteils nach dem Verformungsvorgang mit dem Soll-Modell,
wobei die angewandten Kräfte zur Verformung und die errechneten Positionen zur Einleitung der Kräfte am Bauteil aufgrund des FEM-Modells ermittelt werden.

2. Verfahren nach Anspruch 1, **dadurch gekennzeichnet, dass** das FEM-Modell als Basis des ersten Richtvorgangs dient.

3. Verfahren nach Anspruch 1 oder 2, **dadurch gekennzeichnet, dass** die angewandten Kräfte zur Verformung des Bauteils und die errechneten Positionen mittels eines Algorithmus bestimmt werden.

4. Verfahren nach einem der Ansprüche 1 bis 3, **dadurch gekennzeichnet, dass** der Algorithmus nach jedem Überprüf- und Vergleichsvorgang des Ist-Modells mit dem 3-dimensionelen Soll-Modell anhand der neu erworbenen Daten optimiert wird.

5. Verfahren nach einem der Ansprüche 1 bis 4, **dadurch gekennzeichnet, dass** der Algorithmus nach jedem Überprüf- und Vergleichsvorgang des Ist-Modells mit dem 3-dimensionalen Soll-Modell anhand der gesammelten Daten optimiert wird.

6. Verfahren nach einem der Ansprüche 1 bis 5, **dadurch gekennzeichnet, dass** die Kräfte mittels Roboter auf das Ist-Bauteil ausgeführt werden.

7. Verfahren nach einem der Ansprüche 1 bis 6, **dadurch gekennzeichnet, dass** die Kräfte als Zug- und Druckkräfte auf das Ist-Bauteil angewandt werden.

8. Verfahren nach einem der vorangehenden Ansprüche, **dadurch gekennzeichnet, dass** die Bauteile dünnwandig sind, vorzugsweise Strukturteile aus der Fahrzeugtechnik, speziell bevorzugt Druckgussteile.

## Claims

1. Method for re-shaping the shape of a plastically deformable component that is preferably embodied from a metal material, said method including:
• creating a three-dimensional desired model of the component;
• designing a finite element model (FEM model) of the desired model of the component;
• capturing the three-dimensional geometry of the deformed actual component; preferably by means of scanning;
• determining the deviation of the actual component with respect to the desired model;
• deforming by means of applying forces to calculated positions of the component;
• checking and comparing the actual component with the desired model after the deformation procedure,
wherein the forces that are applied for the deformation procedure and the calculated positions for introducing the forces to the component are determined on the basis of the FEM model.

2. Method according to Claim 1, **characterized in that** the FEM model is used as the basis of the first re-shaping procedure.

3. Method according to Claim 1 or 2, **characterized in that** the forces that are applied so as to deform the component and the positions that are calculated are determined by means of an algorithm.

4. Method according to any one of Claims 1 to 3, **characterized in that** the algorithm is optimized with reference to the newly obtained data after each checking procedure and procedure of comparing the actual model with the three-dimensional desired model.

5. Method according to any one of Claims 1 to 4, **characterized in that** the algorithm is optimized with reference to the collected data after each checking procedure and procedure of comparing the actual model with the three-dimensional desired model.

6. Method according to any one of Claims 1 to 5, **characterized in that** the forces are applied to the actual component by means of robots.

7. Method according to any one of Claims 1 to 6, **characterized in that** the forces are applied to the actual component as pulling forces and pushing forces.

8. Method according to any one of the preceding claims, **characterized in that** the components are thin-walled, preferably structural parts in automotive engineering, especially preferably cast components.

## Revendications

1. Procédé de dressage de la forme d'une pièce à déformation plastique, de préférence composée d'un matériau métallique, comprenant les étapes consistant à :
- créer un modèle théorique tridimensionnel de la pièce ;
- concevoir un modèle d'éléments finis (modèle FEM) du modèle théorique de la pièce ;
- détecter la géométrie tridimensionnelle de la pièce réelle déformée, de préférence par balayage ;
- établir l'écart de la pièce réelle par rapport au modèle théorique ;
- déformer la pièce par application de forces à des positions calculées ;
- vérifier et comparer la pièce réelle avec le modèle théorique après le processus de déformation,
les forces appliquées pour la déformation et les positions calculées pour l'introduction des forces sur la pièce étant établies sur la base du modèle FEM.

2. Procédé selon la revendication 1, **caractérisé en ce que** le modèle FEM sert de base au premier processus de dressage.

3. Procédé selon la revendication 1 ou 2, **caractérisé en ce que** les forces appliquées pour la déformation de la pièce et les positions calculées sont déterminées au moyen d'un algorithme.

4. Procédé selon l'une quelconque des revendications 1 à 3, **caractérisé en ce qu'**après chaque processus de vérification et de comparaison du modèle réel avec le modèle théorique tridimensionnel, l'algorithme est optimisé à l'aide des données nouvellement acquises.

5. Procédé selon l'une quelconque des revendications 1 à 4, **caractérisé en ce qu'**après chaque processus de vérification et de comparaison du modèle réel avec le modèle théorique tridimensionnel, l'algorithme est optimisé à l'aide des données collectées.

6. Procédé selon l'une quelconque des revendications 1 à 5, **caractérisé en ce que** les forces sont exercées sur la pièce réelle au moyen de robots.

7. Procédé selon l'une quelconque des revendications 1 à 6, **caractérisé en ce que** les forces sont appliquées à la pièce réelle sous la forme de forces de traction et de compression.

8. Procédé selon l'une quelconque des revendications précédentes, **caractérisé en ce que** les pièces sont à paroi fine, de préférence des pièces structurelles issues de la technique automobile, de manière particulièrement préférée des pièces coulées sous pression.
